# EUROPÄISCHE PATENTSCHRIFT

(11) **EP 1 114 271 B1**
(45) Veröffentlichungstag und Bekanntmachung des Hinweises auf die Patenterteilung: **09.10.2002**
(21) Anmeldenummer: 99941577.1
(22) Anmeldetag: 12.08.1999
(51) Int. Cl.: F16L 11/08, F16L 11/02

(54) **FLEXIBLER STRANGFÖRMIGER HOHLKÖRPER**
HOLLOW BODY IN THE FORM OF A FLEXIBLE BAR
CORPS CREUX EN FORME DE BARRE FLEXIBLE

(30) Priorität: 13.08.1998 DE 19837494
(43) Veröffentlichungstag der Anmeldung: 11.07.2001
(73) Patentinhaber: Eaton Fluid Power GmbH, 76532 Baden-Baden (DE)
(72) Erfinder: ENDERS, Silvia, D-76532 Baden-Baden (DE)
(74) Vertreter: Gleiss, Alf-Olav, Dr.jur. Dipl.-Ing.
(86) Internationale Anmeldenummer: EP9905847
(87) Internationale Veröffentlichungsnummer: WO00009927

(56) Entgegenhaltungen:
- DE-A- 4 118 552
- US-A- 4 510 974
- US-A- 4 905 735

## Beschreibung

Die Erfindung betrifft einen flexiblen strangförmigen Hohlkörper mit einem von einem Mantel umschlossenen Innenraum zum Transport von Medien, wobei in den Mantel eine Spezzschicht integriert ist, die für flüchtige Moleküle des zu transpoztierenden Mediums undurchlässig ist.

Flexible strangförmige Hohlkörper der gattungsgemäßen Art sind bekannt. Diese nachfolgend auch als Schlauch bezeichneten strangförmigen Hohlkörper werden in vielen Gebieten der Technik zum Transport von flüssigen oder gasförmigen Medien eingesetzt. Bei der Anwendung in klimatechnischen Anlagen, beispielsweise in Kraftfahrzeugen, werden derartige Schläuche zum Transport von Kältemitteln eingesetzt. Kältemittel haben die Eigenschaft, daß diese flüchtig sind, die, wenn diese in die Erdatmosphäre gelangen, zu schädlichen Einflüssen führen. Um das zu vermeiden, sollen natürliche Kältemittel, zum Beispiel CO₂ eingesetzt werden. Bei bekannten Kältemittelschläuchen ist nachteilig, daß diese gegenüber natürlichen Kältemitteln, insbesondere gegenüber Kohlendioxid CO₂, nicht diffusionsdicht sind und eine hohe Permeabilität aufweisen.

Allgemein sind Kunstfasergewebe bekannt, die beispielsweise unter dem Handelsnamen Goretex zur Verfügung stehen. Derartige Gewebe sind beispielsweise für Wasser beziehungsweise Wasserdampf in eine Richtung undurchlässig.

Es ist daher Aufgabe der Erfindung, einen flexiblen strangförmigen Hohlkörper der gattungsgemäßen Art zu schaffen, der eine geringe Permeabilität im besonderen gegen CO₂, aufweist.
Erfindungsgemäß wird diese Aufgabe durch einen flexiblen strangförmigen Hohlkörper mit den in Anspruch 1 genannten Merkmalen gelöst. Dadurch wird eine Permeation durch den flexiblen strangförmigen Hohlkörper verhindert, zumindest auf einen vernachlässigbar kleinen Wert reduziert. Somit wird es möglich, insbesondere wenn vorzugsweise die flexiblen strangförmigen Hohlkörper als Kältemittelschlauch eingesetzt werden, Kältemittel zu transportieren, ohne daß das Kältemittel in die Atmosphäre gelangen kann. Eine geringe Permeationsrate gewährleistet gleichzeitig eine zuverlässige Funktion einer mit dem Kältemittel zu versorgenden Kälteanlage.

In bevorzugter Ausgestaltung der Erfindung ist vorgesehen, daß eine Maschenweite der Gewebeschicht kleiner ist als eine Größe der flüchtigen Moleküle des zu transportierenden Mediums. Hierdurch wird vorteilhaft erreicht, daß bereits durch das Aufbringen der Gewebeschicht die Sperrschicht realisiert ist, die für eine Verringerung der Permeabilität des Mantels führt.

In weiterer bevorzugter Ausgestaltung der Erfindung ist vorgesehen, daß die Gewebeschicht radial und axial zu einer Längsachse des Hohlkörpers gewebt ist oder die Gewebeschicht diagonal zur Längsachse des Hohlkörpers gewebt ist. In jedem Falle läßt sich durch die alternativen Webarten eine Maschenweite erzielen, die die benötigte Undurchlässigkeit für die flüchtigen Moleküle des zu transportierenden Mediums gewährleistet.

Ferner ist in bevorzugter Ausgestaltung der Erfindung vorgesehen, daß die Gewebeschicht um die den Innenraum bildende Lage des Mantels gelegt ist, wobei vorzugsweise in Axialrichtung verlaufende Längskanten der Gewebeschicht überlappen. Hierdurch läßt sich in einfacher Weise die Gewebeschicht auf die Lage des Mantels aufbringen.

Darüber hinaus ist in bevorzugter Ausgestaltung der Erfindung vorgesehen, daß die Gewebeschicht um die Lage des Mantels gewickelt ist. Hierdurch kann in einfacher Weise ein beliebig langer flexibler strangförmiger Hohlkörper mit der die Sperrschicht bildende Gewebeschicht versehen werden, indem diese als Endlosband spiralförmig gewickelt wird.

In weiterer bevorzugter Ausgestaltung der Erfindung ist vorgesehen, daß die Gewebeschicht auf die den Innenraum bildende Lage des Mantels gewoben ist. Hierdurch wird ein besonders fester Verbund zwischen der Gewebeschicht und der inneren Lage erreicht.

Darüber hinaus ist in bevorzugter Ausgestaltung der Erfindung vorgesehen, daß die Gewebeschicht als Schrumpfschlauch auf die innere Lage des Mantels gezogen wird. Hierdurch kann der vorgewobene Schrumpfschlauch über die innere Lage gezogen werden, wobei sich infolge der Dehnung des Schrumpfschlauches dieser fest an die innere Lage des Mantels anlegt.
Ferner ist nach der Erfindung vorgesehen, daß die Gewebeschicht mehrlagig ausgebildet ist. Hierdurch lassen sich über das übereinanderliegende Anordnen von mehreren Gewebeschichten äußerst geringe Maschenweiten erzielen, die für selbst relativ kleine flüchtige Moleküle undurchlässig sind. So wird eine äußerst geringe Permeabilität des flexiblen Hohlkörpers erreicht.

Insgesamt wird durch die Ausbildung der Sperrschicht als Gewebeschicht erreicht, daß die Flexibilität des strangförmigen Hohlkörpers durch die Sperrschicht nicht beeinträchtigt wird. Die Gewebeschicht kann aufgrund der ihr innewohnenden Eigenschaften einer Biegebeanspruchung des Hohlzylinders ohne weiteres folgen, ohne daß die Sperrwirkung gegen die flüchtigen Moleküle beeinträchtigt ist.

Als Gewebeschicht eignet sich beispielsweise ein Mikrofasergewebe, das eine Sperrwirkung gegen niedrigmolekulare Medien besitzt. Einsetzbar sind beispielsweise auch aus einem Fasergewebe (Mikrofasergewebe) erhältliche semipermeable Membranen, die zumindest in eine Richtung für die niedermolekularen flüchtigen Moleküle des zu transportierenden Kältemittels undurchlässig sind.

Weitere bevorzugte Ausgestaltungen der Erfindung ergeben sich aus den übrigen, in den Unteransprüchen genannten Merkmalen.

Die Erfindung wird nachfolgend in Ausführungsbeispielen anhand der zugehörigen Zeichnungen näher erläutert. Es zeigen:
- Figur 1: einen Querschnitt durch einen Kältemittelschlauch;
- Figuren 2 bis 4: verschiedene Ausführungsformen von Sperrschichten und
- Figur 5: eine Anordnung einer Sperrschicht in einem Kältemittelschlauch.

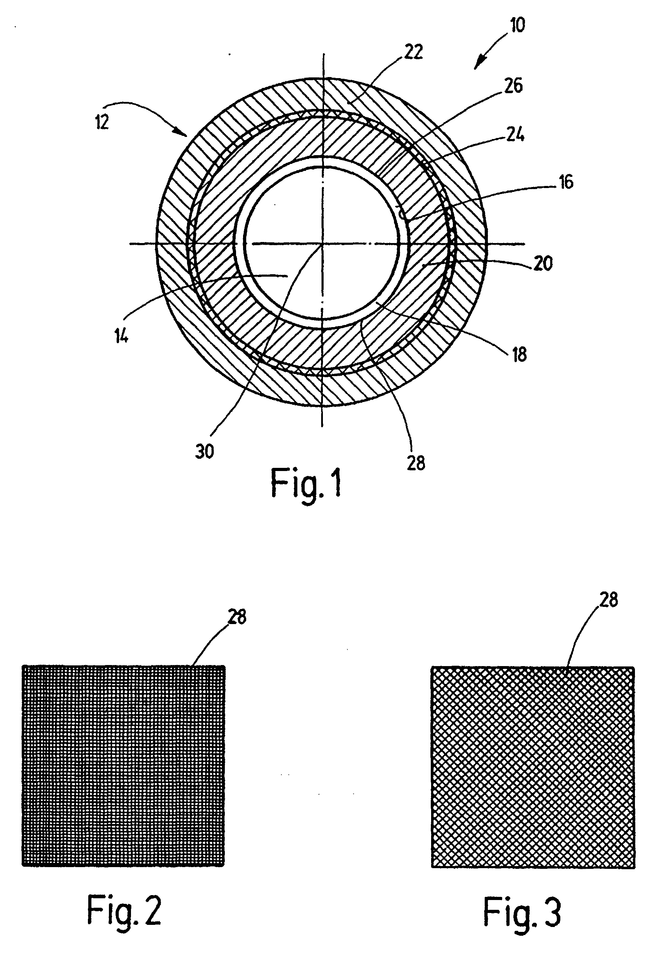

Figur 1 zeigt einen Kältemittelschlauch 10 in einem Querschnitt. Der Kältemittelschlauch 10 umfaßt einen insgesamt mit 12 bezeichneten Mantel, der einen Innenraum 14 umschließt. Der Mantel 12 wird von einem flexiblen strangförmigen Hohlkörper gebildet, der einen vorzugsweise kreiszylindrisch ausgebildeten Innenraum 14 umschließt. Nach weiteren Ausführungsbeispielen kann der Innenraum 14 auch eine andere Form, beispielsweise oval oder dergleichen aufweisen. Der Mantel 12 ist mehrlagig ausgebildet. Um eine Innenlage 18 ist eine Mittellage 20 angeordnet, an die sich eine Außenlage 22 anschließt. Zwischen der Mittellage 20 und der Außenlage 22 ist eine Verstärkungslage 24 angeordnet. Die Lagen 18, 20 und 22 des Mantels 12 bestehen beispielsweise aus einem polymeren Material. Die Verstärkungslage 24 besteht beispielsweise aus einer flexiblen gewebearmierten Schicht.

Auf eine äußere Mantelfläche 16 der inneren Lage 18 ist eine Sperrschicht 26 aufgebracht. Die Sperrschicht 26 besteht aus einer Gewebeschicht 28, deren mögliche Ausführungsvarianten anhand der nachfolgenden Figuren detaillierter erläutert werden.

Gemäß der in Figur 2 ausschnittsweise dargestellten Gewebeschicht 28 kann diese aus koaxial und axial zu einer Längsachse 30 des Hohlkörpers 10 angeordneten, verwebten Fäden bestehen. Gemäß der in Figur 3 gezeigten Ausführungsvariante ist möglich, die die Gewebeschicht 28 bildenden Fäden diagonal, beispielsweise in einem Winkel von 45° zur Längsachse 30 des Hohlkörpers 10 zu verweben.

Unabhängig von der gewählten Ausführungsvariante ist in beiden Fällen eine Maschenweite der Gewebeschicht 28 so gewählt, daß flüchtige Moleküle eines in dem Innenraum 14 des Hohlkörpers 10 transportierten Kühlmittels an einer Diffusion gehindert werden. Als Kältemittel kommt beispielsweise Kohlendioxid CO₂ in Betracht.

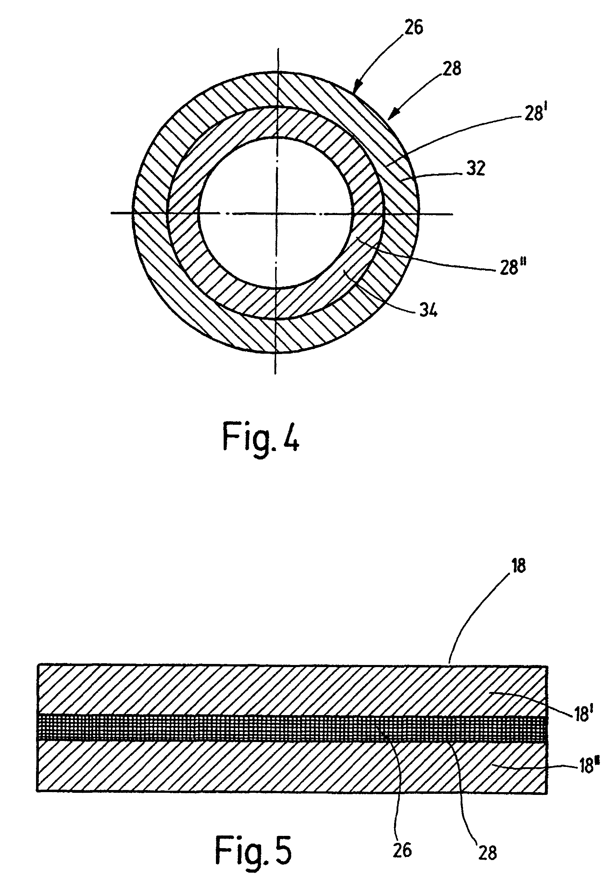

In Figur 4 ist ein erfindungs gemäßes Ausführungs beispiel der von der Gewebeschicht 28 gebildeten Sperrschicht 26 gezeigt. Der weitere Schichtaufbau des Mantels 12 ist in Figur 4 nicht dargestellt. Es wird deutlich, daß die Sperrschicht 26 aus zwei Lagen 32 beziehungsweise 34 von Gewebeschichten 28' beziehungsweise 28" gebildet ist. Hierbei kann beispielsweise die äußere Gewebeschicht 28' diagonal gemäß dem in Figur 3 gezeigtem Ausführungsbeispiel und die Gewebeschicht 28 axial beziehungsweise radial gemäß dem in Figur 2 gezeigten Ausführungsbeispiel gewebt sein. Selbstverständlich sind andere Ausführungsvarianten denkbar, bei denen zum Beispiel beide Gewebeschichten 28' und 28" diagonal oder axial beziehungsweise radial gewebt sind. Die Gewebeschichten 28' und 28" sind so aufeinander abgestimmt, daß eine möglichst geringe Maschenweite der gesamten Sperrschicht 26 erzielt wird, die ein Durchdringen des transportierenden Mediums verhindern. Hierdurch wird die geringe Permeabilität des Mantels 12 des Hohlkörpers 10 gewährleistet.

Die Gewebeschicht 28 kann beispielsweise auf die innere Lage 18 des Hohlkörpers 10 spiralförmig aufgewickelt sein, schlauchförmig über diese gezogen sein oder als flächenhaftes Gebilde um diese gelegt sein. In jedem Falle wird die innere Lage 18 vollflächig von der Gewebeschicht 28 umschlossen, so daß die Sperrschicht 26 lückenlos die Permeabilität des Mantels 12 des Hohlkörpers 10 gering hält.

Figur 5 zeigt ausschnittsweise eine innere Lage 18 des Mantels 12, in die die Sperrschicht 26 bildende Gewebeschicht 28 eingebettet ist. Dieses Einbetten kann dadurch erfolgen, daß die die innere Lagen 18 bildende Polymermatrix beidseitig einer als Träger für die Polymermatrix dienenden Gewebeschicht 28 angelegt wird. Hierdurch kommt es zur Ausbildung von Teilschichten 18' beziehungsweise 18" der inneren Lage 18, in die die Gewebeschicht 28 integriert ist. Hierdurch wird ein besonders guter Haftverbund zwischen der Gewebeschicht 28 und der Lage 18 erzielt.

Nach weiteren, nicht dargestellten Ausführungsbeispielen kann die Gewebeschicht 28 beispielsweise auch zwischen der mittleren Lage 20 und der Verstärkungsschicht 24 und/oder der Verstärkungsschicht 24 und der äußeren Lage 22 angeordnet sein. In jedem Falle wird erreicht, daß durch das Integrieren der Sperrschicht 26 in den Mantel 12 ein Kältemittel transportiert werden kann, wobei flüchtige Bestandteile des Kältemittels nicht durch den Mantel 12 diffundieren können. Dieser erhält durch die Sperrschicht 26 eine äußerst geringe Permeabilität für die Moleküle des zu transportierenden Kältemittels. Andererseits wird im umgekehrter Richtung ein Diffundieren von Molekülen in den Innenraum 14 durch die Sperrschicht 26 ebenfalls verhindert.

## Patentansprüche

1. Flexibler strangförmiger Hohlkörper mit einem von einem Mantel (12), umschlossenen Innenraum (14) zum Transport von Medien, wobei in den Mantel (12) eine Sperrschicht (26) integriert ist, die für flüchtige Moleküle des zu transportierenden Mediums undurchlässig ist, **dadurch gekennzeichnet, dass** die Sperrschicht (26) von einer mehrlagigen, eine den Innenraum (14) bildende Lage (18) des Mantels (12) umgreifenden Gewebeschicht (28) gebildet ist.

2. Flexibler strangförmiger Hohlkörper nach Anspruch 1 **dadurch gekennzeichnet, daß** die Gewebeschicht (28) zwei Lagen (28'), (28") umfaßt.

3. Flexibler strangförmiger Hohlkörper nach einem der vorhergehenden Ansprüche, **dadurch gekennzeichnet, daß** die Lagen (28'), (28") der Gewebeschicht (28) eine unterschiedliche Webstruktur aufweisen.

4. Flexibler strangförmiger Hohlkörper nach einem der vorhergehenden Ansprüche, **dadurch gekennzeichnet, daß** eine Maschenweite der Gewebeschicht (28) kleiner ist als die Molekülgröße des zu transportierenden Mediums.

5. Flexibler strangförmiger Hohlkörper nach einem der vorhergehenden Ansprüche, **dadurch gekennzeichnet, daß** die Gewebeschicht (28), radial und axial zu einer Längsachse (30) des Hohlkörpers (10) gewebt ist.

6. Flexibler strangförmiger Hohlkörper nach einem der vorhergehenden Ansprüche 1 bis 4, **dadurch gekennzeichnet, daß** die Gewebeschicht (28) diagonal zur Längsachse (30) des Hohlkörpers (10) gewebt ist.

7. Flexibler strangförmiger Hohlkörper nach Anspruch 6, **dadurch gekennzeichnet, daß** die Fäden der Gewebeschicht (28) in einem Winkel von 45° zur Längsachse (30) gewebt sind.

8. Flexibler strangförmiger Hohlkörper nach einem der vorhergehenden Ansprüche, **dadurch gekennzeichnet, daß** die Gewebeschicht (28) um die den Innenraun (14) bildende Lage (18) gelegt ist.

9. Flexibler strangförmiger Hohlkörper nach einem der vorhergehenden Ansprüche 1 bis 7, **dadurch gekennzeichnet, daß** die Gewebeschicht (28) um die den Innenraun (14) bildende Lage (18) gewickelt ist.

10. Flexibler strangförmiger Hohlkörper nach Anspruch 9 **dadurch gekennzeichnet, daß** die Gewebeschicht (28) um die den Innenraun (14) bildende Lage (18) diagonal gewickelt ist.

11. Flexibler strangförmiger Hohlkörper nach einem der vorhergehenden Ansprüche 1 bis 7, **dadurch gekennzeichnet, daß** die Gewebeschicht auf die den Innenraun (14) bildende Lage (18) gewoben ist.

12. Flexibler strangförmiger Hohlkörper nach einem der vorhergehenden Ansprüche 1 bis 7, **dadurch gekennzeichnet, daß** die Gewebeschicht (28) als Schrumpfschlauch auf die den Innenraun (14) bildende Lage (18) gezogen ist .

13. Flexibler strangförmiger Hohlkörper nach einem der vorhergehenden Ansprüche, **dadurch gekennzeichnet, daß** die Gewebeschicht (28) zwischen zwei miteinander vernetzten Teillagen (18'), (18") der den Innenraum (14) bildenden Lage (18) eingebettet ist.

14. Flexibler strangförmiger Hohlkörper nach einem der vorhergehenden Ansprüche, **dadurch gekennzeichnet, daß** der Mantel (12) aus wenigstens einer Lage (18), (20), (22) aus polymerem Werkstoff besteht.

15. Flexibler strangförmiger Hohlkörper nach einem der vorhergehenden Ansprüche, **dadurch gekennzeichnet, daß** der Mantel (12) dreilagig ist.

16. Flexibler strangförmiger Hohlkörper nach einem der vorhergehenden Ansprüche, **dadurch gekennzeichnet, daß** zwischen wenigstens zwei Lagen (20), (22) des Mantels (12) eine Verstärkungslage (24) angeordnet ist.

17. Verwendung eines flexiblen strangförmigen Hohlkörpers nach einem der Ansprüche 1 bis 16 zum Transport eines Kältemittels, insbesondere von Kohlendioxid CO₂.

18. Verwendung eines flexiblen strangförmigen Hohlkörpers nach einem der Ansprüche 1 bis 16 in kältetechnischen Anlagen von Kraftfahrzeugen.

## Claims

1. Hollow body in the form of a flexible bar with an inner space (14) surrounded by a jacket (12) for transportation of media, in which context there is integrated into jacket (12) a barrier layer (26) which is impermeable to volatile molecules of the medium to be transported, **characterised in that** barrier layer (26) is configured from a multipleply fabric layer (28) which surrounds a ply (18) of jacket (12) which configures inner space (14).

2. Hollow body in the form of a flexible bar according to Claim 1 **characterised in that** fabric layer (28) comprises two plies (28'), (28").

3. Hollow body in the form of a flexible bar in accordance with one of the above claims, **characterised in that** plies (28'), (28") of fabric layer (28) exhibit a different weave structure.

4. Hollow body in the form of a flexible bar in accordance with one of the above claims, **characterised in that** a mesh width spacing of fabric layer (28) is smaller than the molecule size of the medium to be transported.

5. Hollow body in the form of a flexible bar in accordance with one of the above claims, **characterised in that** fabric layer (28) is woven radially and axially along a longitudinal axis (30) of hollow body (10).

6. Hollow body in the form of a flexible bar in accordance with one of the above claims 1 to 4, **characterised in that** fabric layer (28) is woven diagonal to longitudinal axis (30) of hollow body (10).

7. Hollow body in the form of a flexible bar in accordance with Claim 6, **characterised in that** the threads of fabric layer (28) are woven at an angle of 45 degrees in relation to the longitudinal axis (30).

8. Hollow body in the form of a flexible bar in accordance with one of the above claims, **characterised in that** fabric layer (28) is laid around ply (18) which configures inner space (14).

9. Hollow body in the form of a flexible bar in accordance with one of the above Claims 1 to 7, **characterised in that** fabric layer (28) is wound diagonally about ply (18) which configures inner space (14).

10. Hollow body in the form of a flexible bar in accordance with Claim 9 **characterised in that** fabric layer (28) is wound diagonally about ply (18) which configures inner space (14).

11. Hollow body in the form of a flexible bar in accordance with one of the above Claims 1 to 7, **characterised in that** the fabric layer is woven over ply (18) which configures inner space (14).

12. Hollow body in the form of a flexible bar in accordance with one of the above Claims 1 to 7 **characterised in that** fabric layer (28) is drawn as a shrink-fit hose over ply (18) which configures inner space (14).

13. Hollow body in the form of a flexible bar in accordance with one of the above claims, **characterised in that** fabric layer (28) is embedded between two interlinked partial plies (18'), (18") of ply (18) which configures inner space (14).

14. Hollow body in the form of a flexible bar in accordance with one of the above claims, **characterised in that** jacket (12) consists of at least one ply (18), (20), (22) made of a polymer material.

15. Hollow body in the form of a flexible bar in accordance with one of the above claims, **characterised in that** jacket (12) is triple-ply.

16. Hollow body in the form of a flexible bar in accordance with one of the above claims, **characterised in that** a reinforcement ply (24) is arranged between at least two plies (20), (22) of jacket (12).

17. Utilisation of a hollow body in the form of a flexible bar in accordance with one of Claims 1 to 16 for transportation of a coolant, particularly carbon dioxide CO₂.

18. Utilisation of a hollow body in the form of a flexible bar in accordance with one of Claims 1 to 16 in vehicles' cooling systems.

## Revendications

1. Corps creux en forme de conduite flexible comportant un espace intérieur (14) entouré par une gaine (12) pour le transport de milieux, dans lequel à l'intérieur de la gaine (12) est intégrée une couche de blocage (26) qui est imperméable vis-à-vis de molécules volatiles du milieu à transporter, **caractérisé en ce que** la couche de blocage (26) est formée par une couche de tissu (28) à plusieurs nappes, qui entourent une couche (18) de la gaine (12), qui définit l'espace intérieur (14).

2. Corps creux en forme de conduite flexible selon la revendication 1, **caractérisé en ce que** la couche de tissu (28) comprend deux nappes (28', 28").

3. Corps creux en forme de conduite flexible selon l'une des revendications précédentes, **caractérisé en ce que** les nappes (28', 28") de la couche de tissu (28) possèdent une structure différente de tissage.

4. Corps creux en forme de conduite flexible selon l'une des revendications précédentes, **caractérisé en ce qu'**une largeur des mailles de la couche de tissu (28) est inférieure à la taille des molécules du milieu devant être transporté.

5. Corps creux en forme de conduite flexible selon l'une des revendications précédentes, **caractérisé en ce que** la couche de tissu (28) est tissée radialement et axialement par rapport à un axe longitudinal (30) du corps creux (10).

6. Corps creux en forme de conduite flexible selon l'une des revendications 1 à 4, **caractérisé en ce que** la couche de tissu (28) est tissée en diagonale par rapport à l'axe longitudinal (30) du corps creux (10).

7. Corps creux en forme de conduite flexible selon la revendication 6, **caractérisé en ce que** les fils de la couche de tissu (28) sont tissés sous un angle de 45° par rapport à l'axe longitudinal (30).

8. Corps creux en forme de conduite flexible selon l'une des revendications précédentes, **caractérisé en ce que** la couche de tissu (28) est disposée autour de la couche (18), qui définit l'espace intérieur (14).

9. Corps creux en forme de conduite flexible selon l'une des revendications précédentes 1 à 7, **caractérisé en ce que** la couche de tissu (28) est enroulée autour de la couche (18) qui définit l'espace intérieur (14).

10. Corps creux en forme de conduite flexible selon la revendication 9, **caractérisé en ce que** la couche de tissu (28) est enroulée en diagonale autour de la couche (18) qui définit l'espace intérieur (14).

11. Corps creux en forme de conduite flexible selon l'une des revendications précédentes 1 à 7, **caractérisé en ce que** la couche de tissu est tissée sur la couche (18) qui définit l'espace intérieur (14).

12. Corps creux en forme de conduite flexible selon l'une des revendications 1 à 7, **caractérisé en ce que** la couche de tissu (28) est tirée en tant que tuyau rétractable sur la couche (18) qui définit l'espace intérieur (14).

13. Corps creux en forme de conduite flexible selon l'une des revendications précédentes, **caractérisé en ce que** la couche de tissu (28) est insérée entre deux couches partielles (18', 18") qui sont maillées entre elles, de la couche (18) définissant l'espace intérieur (14).

14. Corps creux en forme de conduite flexible selon l'une des revendications précédentes, **caractérisé en ce que** la gaine (12) est formée d'au moins une couche (18), (20), (22) formée d'un matériau polymère.

15. Corps creux en forme de conduite flexible selon l'une des revendications précédentes, **caractérisé en ce que** la gaine (12) est formée de trois couches.

16. Corps creux en forme de conduite flexible selon l'une des revendications précédentes, **caractérisé en ce qu'**une couche de renfort (24) est disposée entre au moins deux couches (20), (22) de la gaine (12).

17. Utilisation d'un corps creux en forme de conduite flexible selon l'une des revendications 1 à 16 pour le transport d'un milieu de refroidissement, notamment de gaz carbonique (CO₂).

18. Utilisation d'un corps creux en forme de conduite flexible selon l'une des revendications 1 à 16, dans des installations techniques frigorifiques de véhicules automobiles.
